Europäisches Patentamt

European Patent Office

Office européen des brevets

(11) Veröffentlichungsnummer: **0 215 149**
**B1**

# EUROPÄISCHE PATENTSCHRIFT

(45) Veröffentlichungstag der Patentschrift:
19.04.89

(51) Int. Cl.⁴: **C02F 3/28, B01J 10/00**

(21) Anmeldenummer: **85111777.0**

(22) Anmeldetag: **18.09.85**

(54) Umlaufreaktor.

(43) Veröffentlichungstag der Anmeldung:
25.03.87 Patentblatt 87/13

(45) Bekanntmachung des Hinweises auf die Patenterteilung:
19.04.89 Patentblatt 89/16

(84) Benannte Vertragsstaaten:
AT BE CH DE FR GB IT LI LU NL SE

(56) Entgegenhaltungen:
EP-A- 0 118 621
DE-A- 2 721 208

(73) Patentinhaber: **Fried. Krupp Gesellschaft mit beschränkter Haftung, Altendorfer Strasse 103, D-4300 Essen 1(DE)**

(72) Erfinder: **Kiese, Siegfried, Dr., Kaldernstrasse 10, D-4600 Dortmund 41(DE)**
Erfinder: **Scheffler, Ulrich, Laupendahler Landstrasse 19, D-4300 Essen 16(DE)**

ACTORUM AG

## Beschreibung

Die Erfindung betrifft einen Umlaufreaktor für die anaerobe Reinigung organisch hoch verschmutzter Abwässer, bestehend aus einem aufrechtstehenden zylinderförmigen Behälter mit innenliegender Leiteinheit in Form eines Umlaufrohrs, der einen untenliegenden Abwasserzulauf und im Kopfbereich einen Abwasserablauf sowie einen Gasaustritt aufweist, wobei die Füllhöhe des Behälters größer ist als sein Durchmesser und als die Höhe des Umlaufrohrs.

Anaerobe Verfahren und zugehörige Reaktoren zur Reinigung auch organisch hoch verschmutzter Abwässer insbesondere aus Betrieben der Nahrungs- und Genußmittel-Industrie sind in den Veröffentlichungen Chem.-Ing.-Tech. 53 (1981), Nr. 11, Seiten 844/849, und Chemiker-Zeitung 108. Jahrg. (1984), Nr. 5, Seiten 165 bis 176, beschrieben. Der Vorteil des anaeroben Abbaus von organischer Schmutzfracht durch Mikroorganismen in einem Gärprozeß ist insbesondere in der Energieeinsparung durch Fortfall des Sauerstoffeintrags und in der Gewinnung energiereichen, vielfältig nutzbaren Biogases zu sehen.

Zur Verstärkung der Stoffaustauschvorgänge im Mehrphasensystem Abwasser/Mikroorganismen/Biogas ist die Erzeugung und Aufrechterhaltung einer ausreichenden Mindest-Turbulenz erforderlich. Der Stand der Technik setzt zu diesem Zweck Rührwerke, Schraubenmischer, außenliegende Umwälzpumpen oder auch Verdichter ein, die einen Teil des Biogases wieder in den Fußbereich des Reaktors zurückführen.

Der Erfindung liegt die Aufgabe zugrunde, einen Umlaufreaktor für die anaerobe Reinigung organisch verschmutzter Abwässer in der Weise auszugestalten, daß trotz hoher Reinigungswirkung auf den Einsatz besonderer Antriebseinheiten zur Strömungserzeugung innerhalb des Reaktors verzichtet werden kann: Der Erfindungsgegenstand soll also in der Weise beschaffen sein, daß die Biogasbildung allein einen ausreichenden und stabilen Flüssigkeitsumlauf zur Folge hat.

Die gestellte Aufgabe wird durch einen Umlaufreaktor gelöst, der im wesentlichen die Merkmale des Anspruchs 1 aufweist.

Als Leiteinheit zur Unterteilung des Innenraums des Behälters in eine Aufströmzone und in eine Abströmzone ist dabei konzentrisch zum Behälter ein Umlaufrohr vorgesehen, welches sich aus einem weiteren zylindrischen Unterabschnitt, einem im Vergleich dazu engeren zylindrischen Oberabschnitt und einem dazwischen liegenden Übergangsabschnitt mit in Richtung auf den Oberabschnitt abnehmendem Querschnitt zusammensetzt; der Übergangsabschnitt kann insbesondere konisch ausgebildet sein. Für die Ausbildung einer ausreichenden eigenständigen Umlaufströmung ist der Schlankheitsgrad des Umlaufreaktors – festgelegt durch das Verhältnis zwischen dem Behälterdurchmesser und der Flüssigkeitshöhe im Behälter – von wesentlicher Bedeutung; er sollte Werte zwischen 2 und 20 aufweisen. Eine störungsfreie Umlaufströmung im Umlaufreaktor läßt sich außerdem durch eine Bemessung des Umlaufrohrs sicherstellen, bei welcher das Umlaufrohrvolumen 50 bis 80% des Behältervolumens ausmacht und bei welcher der kleinere Durchmesser des Umlaufrohr-Oberabschnitts Werte zwischen 40 bis 8% des größeren Unterabschnittdurchmessers erreicht. Falls im Umlaufreaktor eine gleichmäßige Biogaserzeugung vor sich geht, führt die Verjüngung des Umlaufrohres in Richtung auf den Oberabschnitt hier zu einer Erhöhung des Gasgehalts im Gas-Flüssigkeitsgemisch. Der demzufolge vorhandene Unterschied zwischen dem Gasgehalt innerhalb und außerhalb des Umlaufrohrs wirkt sich als Druckdifferenz aus, die eine innerhalb des Umlaufrohrs nach oben gerichtete Flüssigkeitsbewegung hervorruft. Diese wird dadurch unterstützt, daß das Abwasser im Fußbereich des Umlaufreaktors in den Unterabschnitt des Umlaufrohrs eingeleitet wird.

Der Durchmesser des Oberabschnitts sollte darüber hinaus mit Rücksicht auf die Gasbildungsrate derart bemessen sein, daß die mittlere Gasleerrohrgeschwindigkeit dort mindestens 0,5 cm/s beträgt. Die Gasleerrohrgeschwindigkeit ist dabei folgendermaßen definiert: Falls ein Gas-Flüssigkeitsgemisch durch ein Rohr strömt, ist die Gasleerrohrgeschwindigkeit die Geschwindigkeit der Gasphase, die sich im Betriebszustand einstellen würde, wenn das Gas allein durch das (leere) Rohr strömte.

Der Bodenabstand zwischen dem Unterabschnitt des Umlaufrohrs und dem Behälter sollte in strömungstechnischer Hinsicht so bemessen sein, daß einerseits kein unnötig hoher Druckverlust durch Querschnittsverengung auftritt, sich andererseits aber keine Feststoffablagerungen und Totzonen bilden.

Für die Bildung der eigenständigen Umlaufströmung hat es sich als vorteilhaft erwiesen, wenn der Behälterschlankheitsgrad Werte um 10 aufweist (Anspruch 2).

Die Länge des Oberabschnitts des Umlaufrohrs sollte vorzugsweise kleiner sein als die Unterabschnittlänge (Anspruch 3); besonders vorteilhafte Werte des genannten Längenverhältnisses liegen im Bereich zwischen 67 (1:1,5) und 20% (1:5).

Bei einer vorteilhaften Ausführungsform des Erfindungsgegenstandes liegt das Verhältnis zwischen dem Oberabschnittdurchmesser und dem Behälterdurchmesser zwischen 8 und 25%, vorzugsweise zwischen 10 und 16% (Anspruch 5).

Das Umlaufrohr sollte weiterhin so bemessen sein, daß das Verhältnis zwischen dem Unterabschnittdurchmesser und dem Behälterdurchmesser zwischen 70 und 95%, vorzugsweise in der Nähe von 90%, liegt (Anspruch 6). Im Hinblick auf die gewünschte eigenständige und störungsfreie Umlaufströmung ist es von Vorteil, den Oberabschnittdurchmesser der Gasbildungsrate derart anzupassen, daß die mittlere Gasleerrohrgeschwindigkeit dort mehr als 1 cm/s beträgt (Anspruch 7).

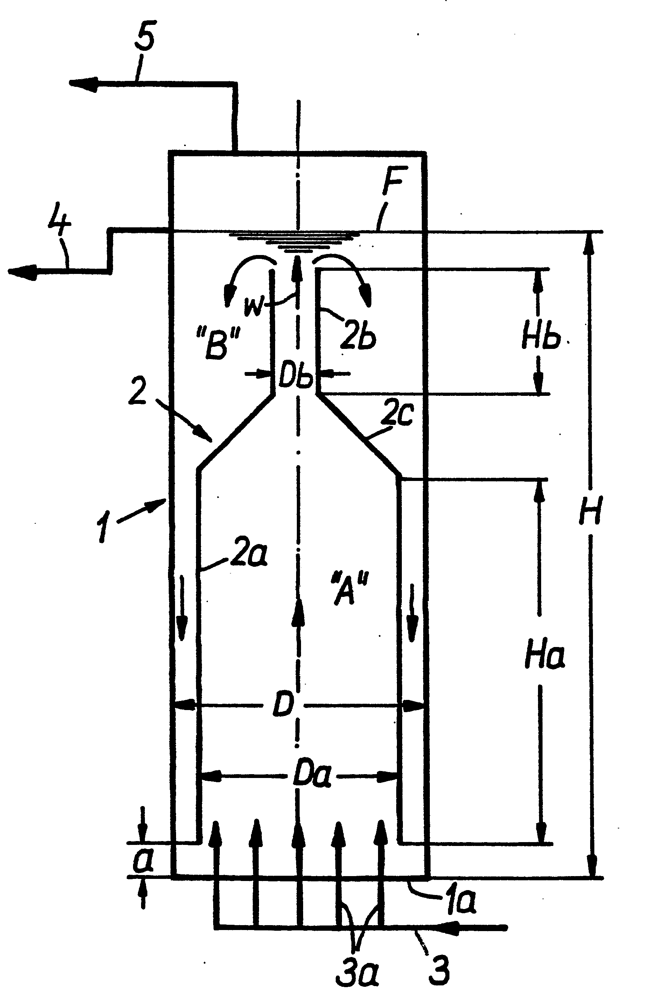

Die Erfindung wird nachfolgend anhand eines in der Zeichnung dargestellten Schemabildes sowie eines Auslegungsbeispiels für einen Umlaufreaktor im einzelnen erläutert.

Der Umlaufreaktor weist als Hauptbestandteil einen aufrechtstehenden, vorzugsweise zylindrischen Behälter 1 auf, der durch eine konzentrisch angeordnete Leiteinheit in Form eines Umlaufrohrs 2 in eine Aufströmzone A im wesentlichen innerhalb des Umlaufrohrs und eine Abströmzone B außerhalb des Umlaufrohrs unterteilt ist.

Das zu reinigende Abwasser wird über einen untenliegenden Abwasserzulauf 3 und mehrere Zulaufelemente 3a vom Fußbereich des Behälters 1 her in das Umlaufrohr 2 eingeleitet. Der Kopfbereich des Behälters 1 ist in Höhe des Abwasserspiegels F – entsprechend seiner Füllhöhe H – mit einem Abwasserablauf 4 und oberhalb desselben mit einem Gasaustritt 5 ausgestattet.

Das Verhältnis zwischen dem Behälterdurchmesser D und der Behälter-Füllhöhe H stellt den Schlankheitsgrad S des Umlaufreaktors dar, welcher eine wesentliche Auslegungsgröße zur Erzielung einer störungsfreien, eigenständigen Umlaufströmung ohne Einsatz zusätzlicher Antriebselemente darstellt.

Das vom Abwasser umschlossene Umlaufrohr 2 setzt sich aus einem zylindrischen Unterabschnitt 2a mit einem Durchmesser $D_a$ und einer Höhe $H_a$, einem engeren zylindrischen Oberabschnitt 2b mit einem Durchmesser $D_b$ und einer Höhe $H_b$ sowie einem dazwischen liegenden konischen Übergangsabschnitt 2c zusammen.

Das Volumen $V_U$ des Umlaufrohres 2 macht 50 bis 80% des Behältervolumens V (errechnet aus dem Behälterdurchmesser D und der Behälter-Füllhöhe H) aus.

Bedingt durch die Verjüngung des Umlaufrohrs 2 nach oben hin erhöht sich der Gasgehalt im Gas-Flüssigkeitsgemisch dort im Vergleich zum Gasgehalt in der Abströmzone B. Die sich daraus ergebende Druckdifferenz hat eine Umlaufströmung zur Folge. Die dementsprechend im Oberabschnitt 2b vorhandene Gasgeschwindigkeit ist durch den Pfeil w angedeutet.

Das von Mikroorganismen in einem Gärprozeß beim anaeroben Abbau von Biomasse gebildete, energiereiche und vielseitig verwendbare Biogas wird über den Gasaustritt 5 der weiteren Verwendung zugeführt. Das zu einem erheblichen Anteil von seiner organischen Verschmutzung befreite Abwasser verläßt den Umlaufreaktor über den bereits erwähnten Abwasserablauf 4.

Der aus strömungstechnischen Gründen einzuhaltende Abstand zwischen dem Unterabschnitt 2a und dem Behälterboden 1a ist mit a bezeichnet.

Die Ausbildung des erfindungsgemäßen Umlaufreaktors wird nachfolgend anhand eines Zahlenbeispiels betreffend die anaerobe Reinigung organisch verschmutzten Abwassers erläutert:

200 m³/d Abwasser mit einer organischen Verschmutzungskonzentration – gemessen als chemischer Sauerstoffbedarf (CSB) – von 25.000 mg CSB/l sollen bei einer Raumbelastung von 12,5 kg CSB/m³ x d anaerob gereinigt werden; unterstellt wird dabei ein Abbauverhalten des Abwassers, welches einen CSB-Abbaugrad von 80% ermöglicht.

Die Reaktionstemperatur beträgt 37°C, der Überdruck am Behälterkopf 0,2 bar, die Dichte des Abwassers 1.000 kg/m³.

Aus den genannten Werten errechnet sich ein erforderliches Brutto-Behältervolumen V von 200 m³. Dem angenommenen Abbaugrad entsprechend beträgt die Biogaserzeugung bei 2.000 kg/d CSB-Abbau etwa 1.000 Nm³/d oder 11,6 Nl/s.

Mit Rücksicht auf das genannte Behältervolumen V ergibt sich bei einem Behälter-Schlankheitsgrad S = H/D zwischen 2 und 20 für den Behälterdurchmesser D ein Wertebereich zwischen 2,33 bis 5,03 m; die Füllhöhe H liegt demgemäß zwischen 46,6 und 10,06 m.

Unter Berücksichtigung des Durchmesserverhältnisses von Oberabschnittdurchmesser $D_a$ zu Behälterdurchmesser D zwischen 40% bis 8% sind dabei für $D_a$ Werte zwischen 0,19 m und 2,01 m anzunehmen.

Diese Werte sind zusätzlich darauf zu überprüfen, ob bzw. für welchen Bereich sie der Bedingung genügen, daß die mittlere Gasleerrohrgeschwindigkeit im Oberabschnitt 2b beispielsweise größer als 1 cm/s ist.

Ausgehend von den genannten Wertebereichen kann für die Auslegung des erfindungsgemäßen Umlaufreaktors die folgende typische Auswahl getroffen werden:
Behälterdurchmesser D = 3,0 m; Füllhöhe H = 28,3 m; Oberabschnittdurchmesser $D_b$ = 0,5 m; Unterabschnittdurchmesser $D_a$ = 2,7 m; Oberabschnitthöhe $H_b$ = 8,0 m; Unterabschnitthöhe $H_a$ = 18,0 m; Bodenabstand a = 0,5 m.

Daraus ergeben sich folgende Verhältniswerte:
S = H/D = 9,43; $D_a$/D = 0,9; $D_b$/D = 0,17; $H_b$/$H_a$ = 0,44; $V_U$/V = 0,6.

Die genannten Werte liegen sämtlich in den als erfindungswesentlich angegebenen Bereichen; entsprechendes gilt für die mittlere Gasleerrohrgeschwindigkeit, die mit etwa 4 cm/s oberhalb der geforderten Untergrenze liegt.

Ein in dieser Weise ausgestalteter Umlaufreaktor ist also in der Lage, ohne zusätzliche Antriebselemente eine eigenständige Umlaufströmung zu erzeugen und damit die geforderte Reinigungsleistung zu erbringen.

Lediglich während der Anlaufphase des Umlaufreaktors, d.h. falls bei zu niedrigen Temperaturen und/oder bei unzureichendem Kontakt der Mikroorganismen mit der Biomasse noch kein Biogas gebildet wird, kann es zweckmäßig sein, durch Einleiten von Gas aus dem Behälterkopf in den Unterabschnitt des Umlaufrohrs eine Umlaufbewegung hervorzurufen.

Auf diese vorübergehende Maßnahme kann jedoch mit Einsetzen der Biogasbildung verzichtet werden.

## Patentansprüche

1. Umlaufreaktor für die anaerobe Reinigung organisch hoch verschmutzter Abwässer, bestehend aus einem aufrechtstehenden zylinderförmigen Behälter mit innenliegender Leiteinheit in Form eines Umlaufrohrs, der einen untenliegenden Abwasserzulauf und im Kopfbereich einen Abwasserablauf sowie einen Gasaustritt aufweist, wobei die Füllhöhe des Behälters größer ist als sein Durchmesser und als die Höhe des Umlaufrohrs, gekennzeichnet durch folgende Merkmale:
- der Behälterschlankheitsgrad (S) – entsprechend dem Verhältnis zwischen der Füllhöhe (H) und dem Behälterdurchmesser (D) – liegt zwischen 2 bis 20;
- das Umlaufrohrvolumen (Vu) macht 50 bis 80% des Behältervolumens (V) aus;
- das Umlaufrohr (2) setzt sich aus einem zylindrischen Unterabschnitt (2a) und einem zylindrischen Oberabschnitt (2b) zusammen, die über einen Übergangsabschnitt (2c) miteinander verbunden sind, wobei der Durchmesser (Db) des Oberabschnitts (2b) zwischen 40 bis 8% des Unterabschnittdurchmessers (Da) ausmacht und
- daß der Oberabschnittdurchmesser (Db) der Gasbildungsrate derart angepaßt ist, daß die mittlere Gasleerrohrgeschwindigkeit (w) dort mindestens 0,5 cm/s beträgt.

2. Vorrichtung nach Anspruch 1, dadurch gekennzeichnet, daß der Behälterschlankheitsgrad (S) etwa 10 beträgt.

3. Vorrichtung nach Anspruch 1 oder 2, dadurch gekennzeichnet, daß die Länge (Hb) des Oberabschnitts (2b) kleiner ist als die Unterabschnittlänge (Ha).

4. Vorrichtung nach einem der Ansprüche 1 bis 3, dadurch gekennzeichnet, daß das Verhältnis (Hb/Ha) zwischen der Länge des Oberabschnitts (2b) und derjenigen des Unterabschnitts (2a) zwischen 67 bis 20% liegt.

5. Vorrichtung nach einem der Ansprüche 1 bis 4, dadurch gekennzeichnet, daß das Verhältnis zwischen dem Oberabschnittdurchmesser (Db) und dem Behälterdurchmesser (D) zwischen 8 und 25%, vorzugsweise zwischen 10 und 16%, liegt.

6. Vorrichtung nach einem der Ansprüche 1 bis 5, dadurch gekennzeichnet, daß das Verhältnis zwischen dem Unterabschnittdurchmesser (Da) und dem Behälterdurchmesser (D) zwischen 70 und 95%, vorzugsweise bei 90%, liegt.

7. Vorrichtung nach einem der Ansprüche 1 bis 6, dadurch gekennzeichnet, daß der Oberabschnittdurchmesser (Db) der Gasbildungsrate derart angepaßt ist, daß die mittlere Gasleerrohrgeschwindigkeit (w) dort mehr als 1 cm/s beträgt.

**Revendications**

1. Réacteur à circulation pour l'épuration anaérobie d'eaux usées fortement polluées par des matières organiques, constitué par un récipient cylindrique vertical comprenant une unité de guidage intérieure ayant la forme d'un tube à circulation qui comporte à sa partie inférieure une arrivée pour les eaux usées et, à sa partie supérieure, une sortie pour les eaux usées et une sortie pour les gaz, la hauteur de remplissage du récipient étant plus grande que son diamètre et que la hauteur du tube à circulation, caractérisée en ce que le coéfficient de sveltesse (S) du récipient, c'est à dire le rapport entre la hauteur (H) de remplissage et le diamètre (D) du récipient est compris entre 2 et 20, en ce que le volume (Vu) du tube à circulation représente de 50 à 80% du volume (V) du récipient, en ce que le tube à circulation (2) se compose d'une partie inférieure cylindrique (2a) et d'une partie supérieure cylindrique (2b) reliées par une partie de transition (2c), le diamètre (Db) de la partie supérieure (2b) représentant de 40 à 8% du diamètre (Da) de la partie inférieure, et en ce que le diamètre (Db) de la partie supérieure est adapté au taux de production de gaz de telle manière que la vitesse moyenne (w) dans le tube d'évacuation des gaz est d'au moins 0,5 cm/s.

2. Dispositif selon la revendication 1, caractérisé en ce que le coéfficient de sveltesse (S) du récipient est égal à 10 environ.

3. Dispositif selon l'une des revendications 1 ou 2, caractérisé en ce que la longueur (Hb) de la partie supérieure (2b) est plus petite que la longueur (Ha) de la partie inférieure.

4. Dispositif selon l'une des revendications 1 à 3, caractérisé en ce que le rapport (Hb/Ha) entre la longueur de la partie supérieure (2b) et celle de la partie inférieure (2a) est compris entre 67 et 20%.

5. Dispositif selon l'une des revendications 1 à 4, caractérisé en ce que le rapport entre le diamètre (Db) de la partie supérieure et le diamètre (D) du récipient est compris entre 8 et 25%, de préférence entre 10 et 16%.

6. Dispositif selon l'une des revendications 1 à 5, caractérisé en ce que le rapport entre le diamètre (Da) de la partie inférieure et le rapport (D) du récipient est compris entre 70 et 95% et est de préférence de 90%.

7. Dispositif selon l'une des revendications 1 à 6, caractérisé en ce que le diamètre (Db) de la partie supérieure est adapté au taux de production des gaz de telle manière que la vitesse moyenne (w) dans le tube d'évacuation des gaz est supérieure à 1 cm/s.

**Claims**

1. A circulation reactor for the anaerobic purification of organically highly polluted sewage, comprising a vertical cylindrical tank containing a guide unit in the form of a circulation tube and having a sewage supply at the base and a sewage discharge and a gas outlet in the head zone, the filling height of the tank being greater than its diameter and than the height of the circulation tube, characterized by the following features:
- the degree of slimness of the tank (S), corresponding to the ratio between the filling height (H) and the tank diameter (D), is between 2 and 20;
- the volume of the circulation pipe (Vu) is 50 to 80% of the tank volume (V);
- the circulating tube (2) is made up of a lower cylindrical portion (2a) and an upper cylindrical portion (2b) interconnected via a transitional portion (2c), the diameter (Db) of the upper portion (2b) being between 40 and 8% of the diameter (Da) of the lower portion, and
- the diameter (Db) of the upper portion is so adapted to the rate of gas formation that the mean empty tube gas speed (w) is at least 0.5 cm/sec at that place.

2. An apparatus according to claim 1, characterized in that the degree of slimness of the tank (S) is about 10.

3. An apparatus according to claims 1 or 2, characterized in that the length ($H_b$) of the upper portion (2b) is smaller than the length of the lower portion ($H_a$).

4. An apparatus according to one of claims 1 to 3, characterized in that the ratio ($H_b/H_a$) between the length of the upper portion (2b) and that of the lower portion (2a) is between 67 and 20%.

5. An apparatus according to one of claims 1 to 4, characterized in that the ratio between the diameter ($D_b$) of the upper portion and the tank diameter (D) is between 8 and 25%, preferably between 10 and 16%.

6. an apparatus according to one of claims 1 to 5, characterized in that the ratio between the diameter ($D_a$) of the lower portion and the tank diameter (D) is between 70 and 95%, preferably around 90%.

7. An apparatus according to one of claims 1 to 6, characterized in that the diameter ($D_b$) of the upper portion is so adapted to the rate of gas formation that the mean empty tube gas speed (w) is more than 1 cm/sec at that place.

EP 0 215 149 B1